# EUROPEAN PATENT APPLICATION

(11) **EP 2 816 052 A1**
(43) Date of publication of application: **24.12.2014**
(21) Application number: 13186788.9
(22) Date of filing: 30.09.2013
(51) Int. Cl.: C07G 1/00, C08H 7/00, C08G 18/64, C08G 18/76, C08L 97/00

(54) **Method for production of heat-insulating materials**

(30) Priority: 20.06.2013 LV 130081
(71) Applicant: "Latvian State Institute of Wood Chemistry" Derived public person, 1006 Riga (LV)
(72) Inventor: Arsanica, Aleksandrs, LV-1063 Riga (LV); Telysheva, Galina, LV-1039 Riga (LV); Dizhbite, Tatiana, LV-1079 Riga (LV); Vevere, Laima, LV-5215 Vandani (LV); Cabulis, Ugis, LV-1084 Riga (LV); Paberza, Aiga, LV3123 Tukums (LV)
(74) Representative: Dolgicere, Nina

(57) **Abstract**

The present invention relates to the method for production of heat-insulating material based on rigid polyurethane foam.

The method makes possible to expand the raw materials base for production of heat-insulating materials without using components obtained from petroleum and vegetable oils.

In the method for production of heat-insulating materials based on rigid polyurethane foam, by combination of isocyanate component with the polyol component, a complex formed by an industrial lignin non-soluble in organic solvents, which is oxypropylated, and then is combined with unmodified lignin in the course of the reaction in ratio from 7:1 to 2.3:1, is used as polyol component. Before being oxypropylated, unmodified lignin is previously oxidized by using POM/ H₂O₂ (polyoxometalates/hydrogen peroxide) system.

The object of the present invention is achieved also by that unmodified lignin before combining with oxypropylated lignin is activated in an impact-type disintegrator increasing the total content of hydroxyl group and availability thereof to chemical interaction.

The object of the present invention is also achieved by that unmodified lignin before being combined with the main component of polyol system - oxypropylated lignin, is oxidized in POM/ H₂O₂ system.

Thus, lignin, which has not been utilized earlier for production of heat-insulating material based on rigid polyurethane foam, is used as one of the main raw materials, furthermore, the characteristics of the obtained material correspond to similar commercially available materials.

## Description

### Technical Field

The present invention relates to a method for production of heat-insulating materials based on rigid polyurethane foams.

### Background Art

At present, methods for production of heat-insulating materials based on rigid polyurethane foams by combining the isocyanate component and the polyol component, obtained from the petrochemical raw material, are well known.

However, the components derived from petroleum, such as polyester and polyether polyols, have some disadvantages. The use of such polyester and polyether polyols contributes to the depletion of the petroleum reserves, which are non-renewable resources. The production of polyols is also an extremely energy-intensive process, because the production of polyol requires drilling for crude oil production, then oil extraction and transportation to an oil refinery plant for oil distillation and obtaining of purified hydrocarbons, which are then converted to alkoxides, and then to final polyol products. Due to the increasing public concern over the environmental impact of this industrial chain, the production of more environmentally safe products it required. To assist in diminishing the depletion of petroleum reserves, simultaneously satisfying the consumers' increasing demands, it would be profitable to replace fully or partially the petroleum derived polyester or polyether polyols, used in the production of polyurethane elastomers and foams, by multi-purpose, renewable, and environmentally friendly components (Sounders D., Frish C., polyurethane Chemistry, khimiya, Moscow, 1968).

The closest known method is the method for the production of heat-insulating materials based on rigid polyurethane foams by combining the isocyanate component and the polyol component obtained from vegetable raw materials, in particular, natural oils and hydroxylated and alkoxylated derivatives thereof. Castor oil, soya oil, Lesquerella oil and mixtures thereof (US application 2010060469, Bayer Material Science LLC) are used as oils.

However, utilized natural oils are foodstuffs, and application thereof for producing heat-insulating materials increases the cost of the final product. Besides, the resources of natural oils are also limited, and application thereof requires complicated prior processing steps for purification thereof.

Despite an introduction of new raw materials, at present most of polyols are produced from petroleum.

### Summary of invention

It is the object of the present invention to expand the raw material base for producing heat- insulating materials that allows avoiding the application of natural oils and utilization of products, which had not yet been used in the production of heat-insulating materials based on rigid polyurethane foams.

As the polyol component in the method for production of heat-insulating materials based on rigid polyurethane foams by combining the isocyanate component with the polyol component, there was used organic solvent insoluble technical lignin complex, which is oxypropylated and then in the course of reaction is combined with unmodified lignin in ratio from 7:1 to 2.3:1.

Before oxypropylation, unmodified lignin is subjected to oxidation by using the system POM/H₂O₂ (polyoxometalates / hydrogen peroxide).

The object of the present invention is achieved by the activation of unmodified lignin, before being combined with oxypropylated lignin, in an impact-type disintegrator, increasing the total content of hydroxyl groups and the availability thereof to chemical interaction.

The object of the present invention is achieved also by the oxidation of unmodified lignin, prior to combination with the main component of the polyol system - oxypropylated lignin, in POM/H₂O₂ system.

### Detailed Description of the Invention

The method according to the present invention is carried out in the following way.

Lignin, insoluble in organic solvents, is characterized by molecular heterogeneity, a high content of acid hydroxyl groups and, as a consequence, a low activity in reactions with isocyanates. Technical lignin, insoluble in organic solvents, is oxypropylated in a high pressure reactor in the presence of an alkaline catalyst; in this case, the process is carried out by simultaneous introduction of lignin, propylene oxide and KOH, where reagent ratio is 3:7:0.15. the reactor is equipped with an external thermal loop, with the aid of which a temperature in the reactor is reached up to 150-165°C, and propylene oxide vapor pressure of 22-25 bar is reached, when oxypropylation process in the reactor begins, accompanied by the temperature rise in the reactor up to 225-250°C and a vapor pressure drop due to the conversion of propylene oxide. The reaction is conducted in autothetrmal conditions; upon the completion of reaction and decrease of the temperature in the reactor up to a room temperature, the obtained product is treated with acetic acid to neutralize the catalyst, then the product is treated in a rotary vaporizer during 6-8 hours at a temperature of 80°C and at pressure decreased up to 0.3 bar. During oxypropylation process, propylene oxide not only reacts with the OH groups of lignin but is partially homopolymerized, resulting in production of propylene glycols of different molecular weight, which form copolymers upon the interaction with OH-acid groups of lignin. As a result, instead of OH-acid groups in lignin, new aliphatic OH groups are formed, the steric accessibility of which is much higher due to the remoteness from the aromatic ring. Besides, the introduction of flexible oxypropyl chains in the lignin structure ensures the solution of the oxypropylated lignin in propylene glycols being formed. Thereby, the enhancement of the reactivity of the product in reactions with isocyanate is reached due to the high reactivity of the polyol components that constitute the polyol - oxypropylated lignin and propylene glycols. In this case, the conditions of the reaction of compatibility of the polyol with unmodified lignin are improved, which is accompanied by the formation of a ligno-polyol system that is highly reactive in reactions with isocyanates, which ensure the chemical bonding of all components into a single three-dimensional polyurethane matrix.

Lignin oxypropylation products comprise a catalytically active additive of potassium acetate in quantities of up to 2-2. 5%, formed as the result of the neutralization of KOH with acetic acid, and which an important component in reactions of urethane formation and trimerisation of isocyanate groups that are the main ones in preparing rigid polyurethanes.

To increase the amount of functional groups in lignin, which are capable of the copolymerization reaction with propylenoxide, an air stream in the presence of the oxidation catalyst - polyoxometalates / hydrogen peroxide is passed through the water suspension of lignin. As a result of oxidation, the concentration of OH groups in lignin is increased by 15-30%. The oxypropylation of oxidized lignin is carried out according to a similar process with the same parameters as in the process of oxypropylation of lignin insoluble in organic solvents.

To increase the lignin component in the polyol system based on lignin, by combining the initial unmodified lignin with the polyol in the course of the reaction, lignin with a moisture content of 10% is treated in a disintegrator with impact-type rotors at the rotational speed up to 100 Hz. The mechanical activation of lignin increases the total specific surface of lignin particles, which makes it possible to increase contact surface of lignin particles with the polyol and enhances the combination reaction. Furthermore, the mechanical activation of lignin increases the total amount of hydroxyl groups in lignin up to 30% and simultaneously decreases the glass transition temperature of lignin, which is the evidence in favour of a partial depolymerization of lignin in the disintegration treatment process. The obtained product is dried in vacuum at a temperature of 80°C; then 10-30% of treated lignin is introduced into the polyol based on oxypropylated or preoxidated lignin at a temperature of 50°C, under intensive mixing.

An example of carrying out said method is given below.

To obtain the polyol component for rigid polyurethanes, the product of oxypropylation of unmodified or pre-oxidized lignin is reactively combined with dispersed and oxypropylated or pre-oxidized lignin without previous mechanical activation or the previously mechanically activated lignin in a disintegrator in ratio from 7:1 to 2.3:1. a crosslinking agent, a catalyst, and a mixture of surfactants and foaming agents are sequentially introduced to the obtained polyol systems under mixing. Then a polymer derivative of diphenylmethane diisocyanate is added to the obtained mixture, under mixing.

To determine the properties of the obtained material, the mixture is poured in an open-type mold, in which the formation and hardening of polyurethane occur. The obtained material contains 25-31 % of ligno-polyol complex.

Upon the expiration of 24 hours, specimens are cut out of the obtained blocks, and characteristic values for the material are determined and listed in the Table below.

**Table 1**

| | Polyurethane foam composition based on the lignin-containing polyol component | Polyurethane foam composition based on common polyester polyols Lupranol 3300 (70%) and Lupranol 3422 (30%) |
|---|---|---|
| Technical parameters of foaming | | |
| Start time | 22 s | 22 s |
| Gel time | 65-70 s | 200 s |
| Foam rise time | 110-133 s | 265 s |

| Properties of material | | |
|---|---|---|
| Apparent density, kg/m | 39-45 | 54 |
| compression strength parallel to the direction of foam rise, MPa | Not less than 0.25 | 0.29 |
| Glass transition temperature, °C | Not less than 120 | 110 |
| Young's modulus in compression parallel to the direction of foam rise, MPa | Not less than 7.1 | 6.8 |
| Water absorption within 28 days, | Not more than 3.4 | 3.8 |
| Vol.% | | |
| Change in the specimen's volume upon exposure within 28 days at 80°C, % | Not more than 0.6 | 4.2 |
| Closed cell content, vol. % | Not less than 95 | 93.3 |
| Thermal conductivity coefficient, W/(m·K) | 0.0235-0.0265 | 0.0244 |

The decrease in the ratio of oxypropylated lignin to unmodified lignin in the ligno-polyol component below 2.3:1 considerably decreases the mechanical characteristics of the material and the characteristics of shape stability, and water absorption indices are increased 1.3-2-fold. Upon the increase of oxypropylated lignin - unmodified lignin ratio above 7:1 in the ligno-polyol component, the total content of the lignin component in the material relative to its optimum content is decreased, as a result of which shape stability of the material is decreased and water absorption indices are increased 1.5-fold.

Thus, the obtained heat-insulating material based on filled rigid polyurethane foams with the use of a lignin-containing polyol component has characteristics comparable with those of commercial polyurethane heat-insulating materials. In this case, the obtained material is more rigid, has greater load bearing capacity and is more thermally stable. The characteristics of the obtained material meet the requirements of the European Standard EN 14315-1 "Thermal insulating products for buildings - in-situ formed sprayed rigid polyurethane (PUR) and polyisocyanate (PIR) foam products".

The proposed method allows using new types of abundant raw materials that permits avoiding the use of both the products derived from petroleum and vegetable oils, including edible oils.

## Claims

1. A method for the production of heat-insulating materials based on filled rigid polyurethane foams by combining the isocyanate component with the polyol component, **characterized in that** a complex formed by the product obtained in the course of the reaction by combining oxypropylated modified lignin non-soluble in organic solvents, with industrial unmodified lignin in ratio from 7:1 to 2.3:1, is used as polyol component.

2. The method according to claim 1, **characterized in that** before being oxypropylated, the unmodified lignin is previously oxidized by using polyoxometalates / hydrogen peroxide system.

3. The method according to claims 1-2, **characterized in that** the unmodified lignin is previously activated in an impact-type disintegrator.

4. The method according to claims 1 - 3, **characterized in that** the unmodified lignin, before being combined with oxypropylated lignin, is oxidized in the polyoxometalates / hydrogen peroxide system.
